# EUROPÄISCHE PATENTSCHRIFT

(11) **EP 0 693 399 B1**
(45) Veröffentlichungstag und Bekanntmachung des Hinweises auf die Patenterteilung: **16.06.1999**
(21) Anmeldenummer: 95111233.3
(22) Anmeldetag: 18.07.1995
(51) Int. Cl.: B60Q 11/00, B60Q 1/30

(54) **Blinkeranzeige**
Blinking indicator
Indicateur clignotant

(30) Priorität: 19.07.1994 DE 9411671 U
(43) Veröffentlichungstag der Anmeldung: 24.01.1996
(73) Patentinhaber: AL-KO KOBER AG, D-89359 Kötz (DE)
(72) Erfinder: Hermann, Gerhard, D-89350 Dürrlauingen (DE)
(74) Vertreter: Ernicke, Hans-Dieter, Dipl.-Ing.

(56) Entgegenhaltungen:
- EP-A- 0 501 014
- DE-A- 3 724 916
- DE-A- 3 819 639
- DE-C- 3 522 481
- US-A- 4 939 503

## Beschreibung

Die Erfindung betrifft eine Blinkeranzeige für Zugfahrzeuge mit Anhänger mit den Merkmalen im Oberbegriff des Hauptanspruchs.

Eine solche Blinkeranzeige ist aus der DE-A-43 39 128 bekannt. Die Meß- und Auswerteeinrichtung besteht aus drei Schaltkomponenten, nämlich dem Blinktaktgeber, einer zusätzlichen Schalteinrichtung und einer gesonderten Anhängererkennungsschaltung, die die Existenz und Ankupplung eines Anhängers feststellt. Die Meß- und Auswerteeinrichtung ist in den fahrzeugseitigen Stromkreis vor die Fahrzeugblinkleuchten geschaltet. Sie mißt den durch alle Blinkleuchten von Fahrzeug und Anhänger fließenden Blinkerstrom. Die Fehlererkennung wird über den Blinkgeber durchgeführt, der einen besonderen Kontrollausgang aufweist, der mit der zusätzlichen Schalteinrichtung und der Anhängererkennungsschaltung verbunden ist. Die zusätzliche Schalteinrichtung kann mit einem akustischen Signalgeber in Form eines Summers verbunden sein. Die Anordnung erfordert einen hohen schaltungstechnischen Aufwand und unterliegt Fehlereinflüssen, die vom Zugfahrzeug herrühren. Zur Blinküberwachung müssen drei verschiedene Informationen überwacht und ausgewertet werden. Außerdem sind erhebliche Eingriffe und eine Umrüstung des elektrischen Bordnetzes am Zugfahrzeug erforderlich.

Ähnlich aufwendige Blinkeranzeigen sind auch aus der DE-A 38 19 639, DE-A 41 34 981 und DE-A 41 34 993 sowie DE-U 87 10 312 bekannt. Zum Teil werden hierbei besondere Treiberschaltungen für die gesamte Anhängerbeleuchtung eingesetzt, die an den fahrzeugseitigen Leuchten nur einen Signalstrom abgreifen und damit eine separate Spannungsversorgung für die Anhängerbeleuchtung schalten. Die Anhängerbeleuchtung wird dadurch separat aus dem Bordnetz gespeist. Die Treiberschaltungen können eigene Überwachungseinrichtungen für den Leuchtenstrom der Anhängerbeleuchtung haben. Die jeweiligen Schaltzustände werden dem Fahrzeugführer durch optische Anzeigen im Armaturenbrett signalisiert.

Aus der EP-A 0 527 254 ist im weiteren eine hochintegrierte Prüfschaltung bekannt, die alle Leuchten des Anhängers überprüft. Sie legt dazu eine eigene Prüfspannung an das Leuchtensystem des Anhängers an und prüft den Ohmschen Widerstand der einzelnen Lampen. Die Prüfung wird ein- oder mehrmals durchgeführt, vorzugsweise beim Anlassen des Motors. Bei intakter Anhängerbeleuchtung wird optisches oder akustisches Signal abgegeben. Es handelt sich hierbei um ein Summensignal für alle Lampen und nicht um eine spezielle Blinkerüberwachung. Durch die eigenständige Widerstandsprüfung findet keine permanente Überprüfung der Blinkleitung und keine Signalabgabe im Blinkerrhythmus statt.

Aus der Praxis ist ferner eine Blinkeranzeige bekannt, bei der die Meß- und Auswerteeinrichtung in den fahrzeugseitigen Stromkreis vor den Blinkgeber geschaltet ist und den fließenden Blinkerstrom mißt. Sie ist mit einer Leuchtanzeige im Armaturenbrett verbunden und blinkt im Rhythmus mit den Anhängerblinkleuchten. In der Meß- und Auswerteeinrichtung wird der durch alle betätigten Blinkerleuchten fließende Gesamtstrom gemessen. Bei Überschreiten der vorgegebenen Schaltschwelle blinkt die Signalvorrichtung mit. Die Schaltschwelle muß bei der vorbekannten Anordnung auf die Gesamtleistung der betätigten Blinkerleuchten abgestimmt sein und kann je nach Fahrzeugtyp variieren. Die Blinkeranzeige bedarf daher einer Anpassung an die verschiedenen Zugfahrzeuge. Außerdem ist eine Kabelverbindung und der Einbau einer Blinklampe im Armaturenbrett erforderlich.

Es ist Aufgabe der vorliegenden Erfindung, die Blinkeranzeige zu vereinfachen.

Die Erfindung löst diese Aufgabe mit den Merkmalen im Hauptanspruch.
Die erfindungsgemäße Blinkeranzeige befaßt sich nur mit der Überwachung der Blinkleuchten, deren Funktion eindeutig und zuverlässig signalisiert wird. Im Normalbetrieb bei funktionierenden Anhängerblinkleuchten meldet die Signaleinrichtung im Blinkrhythmus und während der gesamten Blinkdauer. Das Auftreten eines Fehlers, beispielsweise der Ausfall einer Anhängerblinkleuchte, wird durch eine akustisch deutlich wahrnehmbare Änderung der Taktfrequenz signalisiert. Vorzugsweise verstummt dann die Signaleinrichtung.

Die Blinkeranzeige ist besonders einfach und kostengünstig. In Verbindung mit der eigenen, vorzugsweise akustischen Signalvorrichtung bildet sie eine komplette Baueinheit, die sich leicht handhaben läßt. Die Blinkeranzeige kann ohne viel Aufwand und ohne größere Eingriffe am Bordnetz des Zugfahrzeugs eingebaut und auch nachgerüstet werden. Sie eignet sich insbesondere für Zugfahrzeuge, bei denen der Blinkerstrom für den Anhänger von den Blinkleuchten des Zugfahrzeugs abgegriffen wird.

Die Meß- und Auswerteeinrichtung ist in die Blinkleitung zwischen die Fahrzeugblinkleuchten und die Anhängerblinkleuchten geschaltet und mißt permanent den Blinkerstrom. Die Blinkeranzeige tritt dadurch automatisch nur bei angekuppeltem Anhänger in Erscheinung. Eine separate Anhängererkennungsschaltung ist entbehrlich.

Auf diese Weise muß andererseits nicht mehr der Gesamtstrom durch alle betätigten Blinkleuchten, sondern nur noch der durch die Anhängerblinkleuchte(n) fließende Strom gemessen werden. Die Blinkeranzeige ist damit nicht mehr abhängig von den Fahrzeugblinkleuchten und bedarf keiner Anpassung an das Zugfahrzeug mehr. Die Leistungsstreubreite bei den Anhängerblinkleuchten ist relativ gering, so daß die Schaltschwelle der Blinkeranzeige sich einfach einstellen läßt. Die Einstellung hat für den größten Teil der vorkommenden Anhänger Gültigkeit.

Die Meß- und Auswerteeinrichtung ist vorzugsweise am Zugfahrzeug angeordnet, kann sich aber auch am Anhänger befinden und ist dann speziell auf den Anhänger abgestimmt. Für eine besonders einfache Montage, die auch eine wenig aufwendige Nachrüstung eines Zugfahrzeugs ermöglicht, ist die Meß- und Auswerteeinrichtung zwischen die rückwärtigen Fahrzeugblinkleuchten und die Anhängersteckdose geschaltet. Vorzugsweise befindet sie sich im Heck des Zugfahrzeugs und dabei vorteilhafterweise auch in der Nähe der Anhängerkupplung, vorzugsweise in der Anhängersteckdose. In diesem Bereich sind die Blinkleitungen in der Regel leicht zugänglich.

Von besonderem Vorteil ist es, wenn die Signalvorrichtung einen akustischen Signalgeber aufweist. Dies ermöglicht es, die Signalvorrichtung in der Nähe der Meß- und Auswerteeinrichtung zu plazieren. Eine Anordnung am Armaturenbrett und die Verlegung entsprechender Kabel ist entbehrlich, was den Montageaufwand erheblich verringert. In der bevorzugten Ausführungsform ist die akustische Signalvorrichtung im Heck des Zugfahrzeugs und möglichst auch in der Nähe der Meß- und Auswerteeinrichtung angeordnet. Die Signalvorrichtung kann auch in die Meß-und Auswerteeinheit integriert sein.

Die akustische Signalvorrichtung ist z. B. als Hupe oder in anderer geeigneter Weise ausgebildet. Zur deutlichen und sicheren Erfassung der Signalgeräusche empfiehlt es sich, eine Signalfrequenz außerhalb der im Betrieb üblicherweise vorkommenden Fahrgeräuschfrequenzen zu wählen.

In den Unteransprüchen sind weitere vorteilhafte Ausgestaltungen der Erfindung angegeben.

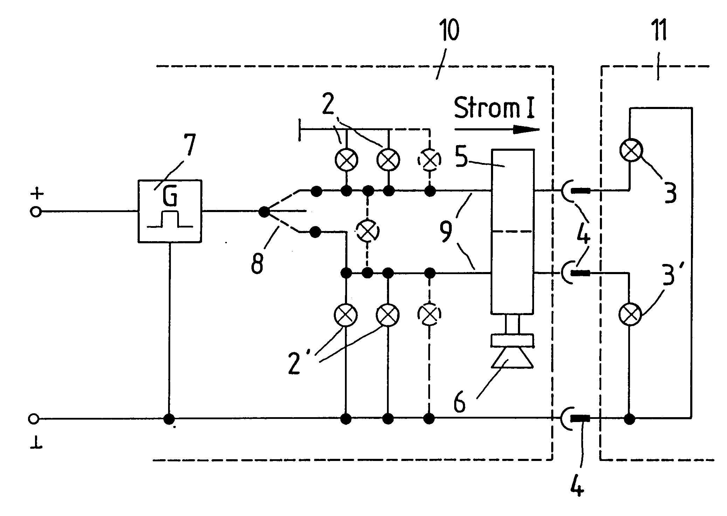

Die Erfindung ist in der Zeichnung beispielsweise und schematisch dargestellt. Sie zeigt eine Blinkeranlage (1) in einem Schaltschema, wobei das Zugfahrzeug (10) und der Anhänger (11) durch strichlierte Umrißlinien angedeutet sind.

Das Zugfahrzeug (10) besitzt auf der rechten und linken Seite vordere und hintere oder gegebenenfalls auch seitliche Fahrzeugblinkleuchten (2,2'). In die fahrzeugseitige Stromzuführung ist ein Blinkgeber (7) mit einem nachgeordneten Schalter (8) geschaltet, der den Blinkstrom auf die beiden Blinkleitungen (9) schaltet. Zwischen die zwei Blinkleitungen (9) kann fahrzeugseitig eventuell noch eine zusätzliche Kontroll-Blinkleuchte geschaltet sein.

Die Blinkeranzeige (1) weist eine Meß- und Auswerteeinrichtung (5) und eine eigene Signalvorrichtung (6) auf. Die Meß- und Auswerteeinrichtung (5) ist in die Blinkleitungen (9) zwischen die Fahrzeugblinkleuchten (2,2') und die Anhängerblinkleuchten (3,3') geschaltet. In der bevorzugten Ausführungsform befindet sie sich zwischen den rückwärtigen Fahrzeugblinkleuchten (2,2') und der am Zugfahrzeug (10) befindlichen Anhängersteckdose (4). Sie kann z.B. in der Anhängersteckdose (4) angeordnet sein.

Die Meß- und Auswerteeinrichtung (5) mißt permanent den über die Steckdose (4) an die im Anhänger (11) befindlichen Anhängerblinkleuchten (3,3') fließenden Blinkerstrom. Die Anhängerblinkleuchten (3,3') sind bei den verschiedenen Anhängertypen in der Regel gleich und haben eine Leistung von je 21 Watt. Die Meß- und Auswerteeinrichtung ist mit ihrer Schaltschwelle auf die Leistung der Anhängerblinkleuchten (3,3') bzw. den durch diese Leuchten fließenden Blinkerstrom abgestimmt. Bei Überschreiten der vorgegebenen Schaltschwelle wird die Signalvorrichtung (6) betätigt und gibt ein Signal im Blinkrhythmus ab.

Die Signalvorrichtung (6) hat vorzugsweise einen akustischen Signalgeber, z. B. eine Hupe, einen Summer, eine Pfeifeinrichtung oder dergleichen. Sie besitzt eine Signalfrequenz, die außerhalb der gewöhnlichen Fahrgeräuschfrequenzen liegt und hat außerdem eine Lautstärke, die selbst bei hoher Fahrgeschwindigkeit und oberer Motordrehzahl den Fahrgeräuschpegel übertönt.

Tritt ein Fehler im Blinkerkreislauf auf, indem z. B. eine Anhängerblinkleuchte (3,3') ausfällt, ein Kontakt in der Anhängersteckdose (4) nicht geschlossen ist oder eine andere Beeinträchtigung der Leuchtenfunktion vorliegt, verstummt vorzugsweise die Signaleinrichtung (6). Sie kann alternativ auch ihre Taktfrequenz ändern und in einem anderen Rhythmus als das normale Blinkergeräusch im Zugfahrzeug (10) ertönen.

Durch das im Blinkrhythmus ertönende Signal kann der Fahrzeugführer erkennen, daß die Anhängerblinkleuchten korrekt funktionieren, d.h. daß sie intakt und in Betrieb sind. Das Signal ist dabei während der gesamten Blinkdauer zu vernehmen. Das Verstummen oder die abweichende Taktfrequenz bei Anhängerbetrieb zeigen dem Fahrzeugführer das Vorliegen eines Fehlers an und veranlassen ihn zu einer Überprüfung.

Bei Solobetrieb des Fahrzeugs ohne Anhänger fließt hinter den Fahrzeugblinkleuchten (2,2') kein Strom, so daß die Blinkerkontrolle automatisch nur bei Anhängerbetrieb in Erscheinung tritt und eindeutige Signale abgibt.

Die Meß- und Auswerteeinrichtung (5) besteht vorzugsweise aus zwei getrennten Einheiten für die rechte und linke Blinkleitung (9). Die beiden Einheiten sind gleich ausgebildet und weisen eine geeignete, vorzugsweise elektronische Schaltung auf. Die beiden Einheiten können auch zu einer Kombischaltung zusammengefaßt sein. Die Schaltung registriert den durch die Anhängerblinkleuchte (n) (3,3') fließenden Blinkerstrom und steuert bei Stromausfall oder bei Unterschreiten oder Überschreiten einer voreingestellten Schaltschwelle die Signaleinrichtung (6) an.

Die Meß- und Auswerteeinrichtung (5) ist im Heck des Zugfahrzeugs (10) und dabei nahe der Anhängerkupplung (nicht dargestellt) angeordnet. Vorzugsweise ist sie in die Anhängersteckdose (4) integriert. Die Signalvorrichtung (6) befindet sich ebenfalls vorzugsweise im Fahrzeugheck. Sie kann im Kofferraum nahe der Meß- und Auswerteeinrichtung (5) angeordnet oder sogar in diese integriert sein. Es ist aber auch möglich, die Signalvorrichtung (6) im Fahrgastraum, z. B. auf der Hutablage, an den Rücksitzen oder an einer anderen geeigneten Stelle anzubringen und über ein Kabel mit der Meß- und Auswerteeinrichtung (5) zu verbinden. Die Signalvorrichtung (6) ist in den verschiedenen Ausführungsformen jeweils mit beiden Einheiten der Meß-und Auswerteeinrichtung (5) verbunden.

Abwandlungen des beschriebenen Ausführungsbeispieles sind in verschiedener Weise möglich. Zum einen kann die Meß-und Auswerteeinrichtung an einer anderen geeigneten Stelle der Blinkleitung (9) angeordnet sein. Ferner kann eine andere Signalvorrichtung eingesetzt werden, z. B. die aus dem Stand der Technik vorbekannte Blinkleuchte im Armaturenbrett. Es ist dann eine entsprechende Kabelverbindung zwischen der Meß- und Auswerteeinrichtung und der Blinkleuchte zu schaffen. In einer weiteren Ausführungsform kann die Meß- und Auswerteeinrichtung zusätzlich oder alternativ auf den Blinkimpuls ansprechen. Zudem kann die Signalvorrichtung eine eigene Stromversorgung haben und nur von der Meß- und Auswerteeinrichtung angesteuert werden. In einer weiteren Abwandlung kann die Meß- und Auswerteeinrichtung für beide Anhängerblinkleuchten gemeinsam in der Masseleitung angeordnet sein.

### BEZUGSZEICHENLISTE

- 1: Blinkeranzeige
- 2: Fahrzeugblinkleuchten, rechts
- 2': Fahrzeugblinkleuchten, links
- 3: Anhängerblinkleuchten, rechts
- 3': Anhängerblinkleuchten, links
- 4: Anhängersteckdose
- 5: Meß- und Auswerteeinrichtung
- 6: Signalvorrichtung
- 7: Blinkgeber
- 8: Schalter
- 9: Blinkleitung
- 10: Zugfahrzeug
- 11: Anhänger

## Patentansprüche

1. Blinkeranzeige für Zugfahrzeuge mit Anhänger mit einer Meß- und Auswerteeinrichtung für den Blinkerstrom und einer Signalvorrichtung, dadurch **gekennzeichnet**, daß die Meß- und Auswerteeinrichtung (5) in die Blinkleitung (9) zwischen die Fahrzeugblinkleuchten (2,2') und die Anhängerblinkleuchten (3,3') geschaltet ist und permanent den zu den Anhängerblinkleuchten (3,3') fließenden Blinkerstrom mißt, wobei die Signalvorrichtung (6) einen Signalgeber aufweist, der bei angeschlossenem Anhänger und bei korrekter Funktion der Anhängerblinkleuchten (3,3') während der Blinkdauer ein Signal im Blinkrhythmus abgibt.

2. Blinkeranzeige nach Anspruch 1, dadurch **gekennzeichnet**, daß die Meß- und Auswerteeinrichtung (5) zwischen die rückwärtigen Fahrzeugblinkleuchten (2,2') und die Anhängersteckdose (4) geschaltet ist.

3. Blinkeranzeige nach Anspruch 1 oder 2, dadurch **gekennzeichnet**, daß die Meß- und Auswerteeinrichtung (5) im Heck des Zugfahrzeugs (10) nahe der Anhängerkupplung angeordnet ist.

4. Blinkeranzeige nach Anspruch 1, 2 oder 3, dadurch **gekennzeichnet**, daß die Meß- und Auswerteeinrichtung (5) in der Anhängersteckdose (4) angeordnet ist.

5. Blinkeranzeige nach einem der Ansprüche 1 bis 4, dadurch **gekennzeichnet**, daß die Signalvorrichtung (6) einen eigenen akkustischen Signalgeber aufweist.

6. Blinkeranzeige nach einem der Ansprüche 1-5, dadurch **gekennzeichnet**, daß die Signalvorrichtung (6) im Heck des Zugfahrzeugs (10) angeordnet ist.

7. Blinkeranzeige nach einem der Ansprüche 1-6, dadurch **gekennzeichnet**, daß die Signalvorrichtung (6) in der Nähe der Meß- und Auswerteeinrichtung (5) angeordnet ist.

8. Blinkeranzeige nach einem der Ansprüche 1-7, dadurch **gekennzeichnet**, daß die Signalvorrichtung (6) in die Meß- und Auswerteeinrichtung (5) integriert ist.

9. Blinkeranzeige nach einem der Ansprüche 1-8, dadurch **gekennzeichnet**, daß die Meß- und Auswerteeinrichtung (5) für die rechte und linke Blinkleitung (9) getrennte Einheiten aufweist.

10. Blinkeranzeige nach einem der Ansprüche 1-9, folgenden, dadurch **gekennzeichnet**, daß die Meß- und Auswerteeinrichtung (5) für die Blinkleitungen (9) eine Kombischaltung aufweist.

11. Blinkeranzeige nach einem der Ansprüche 1-10, dadurch **gekennzeichnet**, daß die akkustische Signalvorrichtung (6) eine Signalfrequenz aufweist, die außerhalb der Fahrgeräuschfrequenzen liegt.

## Claims

1. Flashing indicator for towing vehicles with a trailer with a measuring and evaluating device for the flashing indicator current and a signal device, characterized in that the measuring and evaluating device (5) is connected into the flashing indicator line (9) between the vehicle flashing indicator lights (2,2') and the trailer flashing indicator lights (3, 3') and permanently measures the flashing indicator current flowing to the trailer flashing indicator lights (3, 3'), the signal device (6) having a signal transmitter which outputs a signal with a flashing rhythm during the flashing period when the trailer is connected and when the trailer flashing indicator lights (3, 3') function correctly.

2. Flashing indicator according to Claim 1, characterized in that the measuring and evaluating device (5) is connected between the rear flashing indicator lights (2, 2') and the trailer socket (4).

3. Flashing indicator according to Claim 1 or 2, characterized in that the measuring and evaluating device (5) is arranged at the rear of the towing vehicle (10) near to the trailer coupling.

4. Flashing indicator according to Claim 1, 2 or 3, characterized in that the measuring and evaluating device (5) is arranged in the trailer socket (4).

5. Flashing indicator according to one of Claims 1 to 4, characterized in that the signal device (6) has its own acoustic signal transmitter.

6. Flashing indicator according to one of Claims 1 to 5, characterized in that the signal device (6) is arranged at the rear of the towing vehicle (10).

7. Flashing indicator according to one of Claims 1 to 6, characterized in that the signal device (6) is arranged in the proximity of the measuring and evaluating device (5).

8. Flashing indicator according to one of Claims 1 to 7, characterized in that the signal device (6) is integrated into the measuring and evaluating device (5).

9. Flashing indicator according to one of Claims 1 to 8, characterized in that the measuring and evaluating device (5) has separate units for the right-hand and left-hand flashing indicator line (9).

10. Flashing indicator according to one of Claims 1 to 9, characterized in that the measuring and evaluating device (5) has a combined circuit for the flashing indicator lines (9).

11. Flashing indicator according to one of Claims 1 to 10, characterized in that the acoustic signal device (6) has a signal frequency which lies outside the vehicle noise frequencies.

## Revendications

1. Indicateur de clignotants pour des véhicules tracteurs à remorque, comportant un dispositif de mesure et d'interprétation du courant de clignotement, et un dispositif de signalisation, **caractérisé** en ce que le dispositif (5) de mesure et d'interprétation est branché dans la ligne (9) de clignotement entre les feux (2, 2') clignotants du véhicule et les feux (3, 3') clignotants de la remorque, et mesure en permanence le courant de clignotement allant aux feux (3, 3') clignotants de la remorque, le dispositif (6) de signalisation comportant un générateur de signaux qui, lorsque la remorque est raccordée et en cas de fonctionnement correct des feux (3, 3') clignotants de la remorque, délivre pendant la durée du clignotement un signal au rythme du clignotement.

2. Indicateur de clignotants suivant la revendication 1, **caractérisé** en ce que le dispositif (5) de mesure et d'interprétation est branché entre les feux (2, 2') clignotants arrière du véhicule et le raccordement (4) électrique de remorque.

3. Indicateur de clignotants suivant la revendication 1 ou 2, **caractérisé** en ce que le dispositif (5) de mesure et d'interprétation est disposé à l'arrière du véhicule (10) tracteur, à proximité de l'attelage de remorque.

4. Indicateur de clignotants suivant la revendication 1, 2 ou 3, **caractérisé** en ce que le dispositif (5) de mesure et d'interprétation est disposé dans le raccordement (4) électrique de remorque.

5. Indicateur de clignotants suivant l'une des revendications 1 à 4, **caractérisé** en ce que le dispositif (6) de signalisation comporte un propre générateur de signaux acoustiques.

6. Indicateur de clignotants suivant l'une des revendications 1 à 5, **caractérisé** en ce que le dispositif (6) de signalisation est disposé à l'arrière du véhicule (10) tracteur.

7. Indicateur de clignotants suivant l'une des revendications 1 à 6, **caractérisé** en ce que le dispositif (6) de signalisation est disposé à proximité voisinage du dispositif (5) de mesure et d'interprétation.

8. Indicateur de clignotants suivant l'une des revendications 1 à 7, **caractérisé** en ce que le dispositif (6) de signalisation est incorporé dans le dispositif (5) de mesure et d'interprétation.

9. Indicateur de clignotants suivant l'une des revendications 1 à 8, **caractérisé** en ce que le dispositif (5) de mesure et d'interprétation comporte des unités séparées pour la ligne (9) de clignotement de droite et la ligne (9) de clignotement de gauche.

10. Indicateur de clignotants suivant l'une des revendications 1 à 9, **caractérisé** en ce que le dispositif (5) de mesure et d'interprétation comporte un circuit combiné pour les lignes (9) de clignotement.

11. Indicateur de clignotants suivant l'une des revendications 1 à 10, **caractérisé** en ce que le dispositif (6) de signalisation acoustique possède une fréquence de signaux qui se situe en dehors des fréquences du bruit de roulage.
